(19) Europäisches Patentamt
European Patent Office
Office européen des brevets

(11) Veröffentlichungsnummer: **0 495 370 B1**

# (12) EUROPÄISCHE PATENTSCHRIFT

(45) Veröffentlichungstag der Patentschrift: **06.12.95**

(51) Int. Cl.[6]: **C08L 81/02**, C08L 15/00

(21) Anmeldenummer: **92100116.0**

(22) Anmeldetag: **07.01.92**

## (54) Elastomermodifizierte Polyarylensulfid-Formmassen.

(30) Priorität: **17.01.91 DE 4101176**

(43) Veröffentlichungstag der Anmeldung:
**22.07.92 Patentblatt 92/30**

(45) Bekanntmachung des Hinweises auf die Patenterteilung:
**06.12.95 Patentblatt 95/49**

(84) Benannte Vertragsstaaten:
**BE DE FR GB IT**

(56) Entgegenhaltungen:
**EP-A- 0 398 533**
**EP-A- 0 435 024**

**WORLD PATENTS INDEX LATEST Derwent Publications Ltd., London, GB; AN 88-348830**

**WORLD PATENTS INDEX LATEST Derwent Publications Ltd., London, GB; AN 87-040993**

**WORLD PATENTS INDEX LATEST Derwent Publications Ltd., London, GB; AN 91-138055**

(73) Patentinhaber: **BAYER AG**

**D-51368 Leverkusen (DE)**

(72) Erfinder: **Köhler, Burkhard, Dr.**
**Mündelheimer Strasse 94**
**W-4150 Krefeld 11 (DE)**
Erfinder: **Rüsseler, Wolfgang, Dr.**
**Waldhofstrasse 121**
**W-4150 Krefeld 1 (DE)**
Erfinder: **Döring, Joachim, Dr.**
**Bayer Japan Ltd.,**
**108 Takanawa 4-chome**
**Minatoku,**
**Tokyo 108 (JP)**
Erfinder: **Haese, Wilfried, Dr.**
**Osenauer Strasse 32**
**W-5068 Odenthal (DE)**
Erfinder: **Thörmer, Joachim, Dr.**
**Emil-Nolde-Strasse 39**
**W-5090 Leverkusen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft thermoplastische Formmassen aus Polyarylensulfiden (PAS), vorzugsweise Massen aus Polyphenylensulfiden (PPS) hydrierten Nitrilkautschuken und Maleinimiden.

Teilkristalline Polyarylensulfide, z.B. Polyphenylensulfid, besitzen Eigenschaften, die für bestimmte Anwendungen nachteilig sind, z.B. eine geringe Dehnbarkeit und eine geringe Zähigkeit.

Solche Anwendungen sind z.B. Formteilkonstruktionen, die Schnappverbindungen enthalten, oder Formteile, die in der Nachbehandlung eine Umbördelung des Formteilrandes erfordern, oder Kabelummantelungen für enge Kabelkrümmungsradien. Bei diesen Anwendungen, bei denen Formteile ein- oder mehrmalig stärkeren Verbiegungen oder Schlagbelastungen ausgesetzt sind, sollen sie die vorteilhaften Eigenschaften der Polyarylensulfide nicht verlieren.

Polyarylensulfide geringer Kristallinität, z.B. überwiegend amorphe, wie z.B. Polydiphenylsulfonsulfid oder Copolyphenylensulfide mit hohen Anteilen an m-Phenylensulfid-Einheiten, zeigen die genannten Eigenschaftsdefizite nur in geringem Maße. Jedoch haben diese Polymere dann kaum noch typische Eigenschaften, die auf der Kristallinität des Polymeren beruhen.

Es ist bekannt, teilkristalline Thermoplaste, so auch Polyarylensulfide, durch Einbringen von Kautschuken so zu modifizieren, daß deren Zähigkeit verbessert wird, ohne die übrigen Eigenschaften wesentlich zu ändern. Es können Propfkautschuke verwendet werden, die z.B. auf Dien- oder Acrylat-Kautschuk-Grundlagen basieren (z.B. EP-A 247 412, DE-A 3 616 131) oder unvernetzte, nicht teilchenförmige Kautschuke auf Basis von EP-, EPDM- bzw. Acrylat-Polymeren (z.B. EP-A 142 825) bzw. Styrol-Butadien-Kautschuke (EP-A 259 188).

Die genannten Kautschuke sind von sehr unterschiedlicher Wirksamkeit in Hinblick auf die Zähigkeitsverbesserung des Compounds und verursachen zum Teil erhebliche Eigenschafts-Defizite z.B. in Bezug auf die thermische Stabilität, Oxidations-Beständigkeit bzw. Chemikalien-Resistenz.

Es wurde nun gefunden, daß Polyarylensulfide (PAS) vorzugsweise Polyphenylensulfid (PPS), mit Hilfe von hydrierten Nitril-Knutschuken und Maleinimiden so modifiziert werden können, daß die erhaltenen Polymer-Mischungen eine deutlich bessere Zähigkeit gegenüber Maleinimid-freien Mischungen aufweisen.

Gegenstand der Erfindung sind daher Polyarylensulfid-Formmassen, vorzugsweise Polyphenylensulfid-Formmassen, enthaltend:

A) 30 bis 99,4 Gew.-Teile Polyarylensulfid, vorzugsweise Polyphenylensulfid,

B) 0,5 bis 70 Gew.-Teile an hydrierten Nitrilkautschuken und

C) 0,1 - 3 Gew.-Teile eines Bis- oder Polymaleinimids der Formel (I)

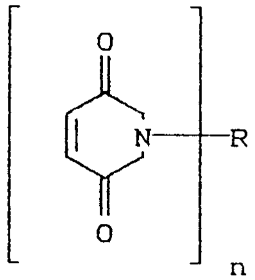

(I),

wobei

R für einen di- oder polyvalenten Rest aliphatischen $C_1$-$C_{22}$, araliphatischen $C_7$-$C_{22}$-Rest oder aromatischen $C_6$-$C_{14}$-Rest steht und

n für eine Zahl von 2 bis 22 steht

und die Gewichtsteile bezogen auf das Gesamtgewicht der Formassen (A + B + C) sind und gegebenenfalls

D) 0 bis 60 Gew.-Teile bezogen auf das Gesamtgewicht der Formmasse aus (A + B + C) an Füll- und Verstärkungsstoffen.

Vorzugsweise steht n in Formel (I) für eine Zahl von 2 bis 10.

Erfindungsgemäß verwendbare Polyarylensulfide sind bekannt (z.B. US-A 3 354 129, EP-A 171 021) und handelsüblich. Die Polyarylensulfide können linear, verzweigt oder vernetzt sein.

Verzweigungen bzw. Vernetzungen können durch multifunktionelle Monomere in der Polyarylensulfid-Synthese oder durch geeignete Nachbehandlungen des überwiegend linearen Polyarylensulfids eingestellt werden.

Geeignete Polyarylensulfide für Komponente A sind z.B.: Polyphenylensulfide, Poly-(alkylenphenylen)-sulfide, Polydiphenylensulfide, Polytetraphenylensulfide, Polynaphthylensulfide, Polyketonsulfide, Polysulfonsulfide, Polyarylensulfide mit heterocyclischen Monomereinheiten bzw. Co-Polyarylensulfide. Bevorzugte Polyarylensulfide sind teilkristalline Polyarylensulfide, erkennbar an Schmelz-und Kristallisationstemperaturen in der DSC; besonders bevorzugt ist Poly-1,4-phenylensulfid.

Die Schmelzviskositäten der eingesetzten Polyarylensulfide liegen bei verstärkten Compounds zwischen 20 und 170 Pa.s, vorzugsweise zwischen 35 und 80 Pa.s, bei unverstärkten Compounds zwischen 60 und 300 Pa.s, vorzugsweise zwischen 80 und 200 Pa.s, jeweils gemessen bei 320 °C, $10^3$ (1/s).

Die Bestimmung der Schmelzviskositäten geschieht in einem handelsüblichen Hochdruckkapillarviskosimeter bei verschiedenen Schergeschwindigkeiten (1/s) bei einer Temperatur der Schmelze von 320 °C. Aus der erhaltenen Viskositätsfunktion wird der $\eta_M$-Wert (in Pa.s) bei $10^3$ (1/s) als Bezugswert angegeben.

Komponenten B im Sinne der Erfindung sind hydrierte Nitrilkautschuke, d.h. Copolymerisate aus ungesättigten Nitrilen und konjugierten Dienen, worin der Hydriergrad der C = C-Doppelbindungen größer als 50 %, bevorzugt größer als 70 %, besonders bevorzugt größer als 90 %, insbesondere größer als 98 %, ist, und der Gehalt an ungesättigten Nitrilen 10-60 Gew.-%, vorzugsweise 15-50 Gew.-%, insbesondere 18-48 Gew.-% beträgt, so daß die Komponente B formal einem Copolymer aus ungesättigtem Nitril und Olefin, vorzugsweise Ethylen, entspricht.

Die hydrierten Copolymerisate sind gelfrei und in Ketonen wie Aceton oder Butanon, in Ethern wie Tetrahydrofuran oder Dioxan oder in chlorierten Kohlenwasserstoffen wie Dichlormethan oder Chlorbenzol, löslich. Unter "selektiver Hydrierung" wird im Sinne der Erfindung die Hydrierung der olefinischen C = C-Doppelbindungen unter Erhalt der C≡N-Dreifachbindungen verstanden. "Unter Erhalt der C≡N-Dreifachbindungen" bedeutet in diesem Zusammenhang, daß weniger als 7, vorzugsweise weniger als 5, insbesondere weniger als 3 und speziell weniger als 1,5 % der ursprünglich vorhandenen Nitrilgruppen des polymeren Ausgangsprodukts hydriert werden.

Die hier in Rede stehenden hydrierten Copolymerisate werden erhalten, indem man bekannte alternierend oder vorzugsweise statistisch aufgebaute Copolymerisate aus ungesättigten Nitrilen und konjugierten Dienen, unter Erhalt der Nitrilgruppen hydriert, (z.B. US-A 3 700 637, DE-A 2 539 132, EP-A 134 023, DE-A 3 046 008, DE-A 3 227 650).

Beispiele für Komponenten B sind die Hydrier-Produkte von Copolymerisaten, die umfassen Copolymerisate aus zumindest einem ungesättigten Nitril wie Acrylnitril oder Methacrylnitril und zumindest einem konjugierten Dien wie Butadien-1,3; 2-Methylbutadien-1,3; 2,3-Dimethylbutadien-1,3; Pentadien-1,3 und ein Produkt, in dem ein Teil der konjugierten Dieneinheiten der genannten Copolymerisate durch eine oder mehrere Einheiten von Vinylaromaten, (Meth)Acrylsäureestern mit 1 bis 12 Kohlenstoffatomen in der Alkoholkomponente oder $\alpha,\beta$- ungesättigten Mono- oder Dicarbonsäuren, ersetzt sind.

Beispiele für die Vinylaromaten sind: Styrol, substituierte Styrole wie o-, m-, p-Methylstyrol, Ethylstyrol, Vinylnaphthalin, Vinylpyridin. Beispiele für die (Meth)Acrylsäureester sind: Methyl(meth)acrylat, Ethyl(meth)-acrylat, n-Butyl(meth)acrylat, 2-Ethylhexyl(meth)acrylat, 2-Hydroxypropyl(meth)acrylat. Beispiele für die ungesättigten Carbonsäuren sind: $\alpha,\beta$-ungesättigte Monocarbonsäuren mit 3 bis 5 Kohlenstoffatomen wie Acrylsäure, Methacrylsäure und Crotonsäure sowie $\alpha,\beta$-ungesättigte Dicarbonsäuren mit 4 bis 5 Kohlenstoffatomen wie Malein-, Fumar-, Citracon- und Itaconsäure, Halbester der $\alpha,\beta$-ungesättigten Dicarbonsäuren wie Maleinsäure-n-dodecylhalbester oder Fumarsäure-n-butylhalbester.

Als andere copolymerisierbare Verbindungen kommen in Betracht: Vinylchlorid, Vinylidenchlorid, N-Methylolacrylamid, Vinyl-$C_1$-$C_4$-alkylether in Vinylester von Carbonsäuren mit 1 bis 18 Kohlenstoffatomen wie Vinylacetat oder Vinylstearat.

Spezielle Beispiele für die zu hydrierenden Copolymerisate umfassen Acrylnitril-Isopren-Copolymerisate, Acrylnitril-Isopren-Butadien-Copolymerisate, Acrylnitril-Isopren-n-Butylacrylat-Copolymerisate, Acrylnitril-Butadien-n-Butylacrylat-Copolymerisate, Acrylnitril-Butadien-Methylacrylat-Copolymerisate, Acrylnitril-Butadien-2-Hydroxypropylmethacrylat-Copolymerisate und Acrylnitril-Butadien-Methacrylsäure-Copolymerisate. Acrylnitril-Butadien-Copolymerisate sind besonders bevorzugt.

Der Hydriergrad der Polymeren (Prozentsatz der hydrierten C = C-Doppelbindungen bezogen auf die Gesamtzahl der ursprünglich im Polymer vorhandenen C = C-Doppelbindungen) wird IR- oder NMR-spektroskopisch bestimmt.

Die Molekulargewichte der hydrierten Nitrilkautschuke liegen zwischen 40 000 und 500 000 (g/Mol), bevorzugt zwischen 50 000 und 400 000 (g/Mol), insbesondere zwischen 60 000 und 300 000 (g/Mol) ($M_w$, Gewichtsmittel, ermittelt durch Gelpermeationschromatographie).

Die Mooney-Viskositäten ML (1 + 4) 100 °C der hydrierten Nitrilkautschuke liegen in der Regel im Bereich von 10 bis 150, vorzugsweise von 25 bis 95 (gemessen nach DIN 53 523).

Die Komponenten B können in Mengen von 0,5 bis 70 Gew.-Teilen, bezogen auf Formmasse aus (A + B + C), enthalten sein. Bei Mitverwendung von Füll- und Verstärkungsstoffen werden vorzugsweise 5 bis 50 Gew.-Teile, besonders bevorzugt 10 bis 40 Gew.-Teile, ganz besonders bevorzugt 10 bis 30 Gew.-Teile, bezogen auf Formmasse (A + B + C), an Komponenten B eingesetzt.

In unverstärkten Polyarylensulfiden werden vorzugsweise 5 bis 40 Gew.-Teile, besonders bevorzugt 10 bis 30 Gew.-Teile und ganz besonders bevorzugt 15 bis 25 Gew.-Teile, Komponenten B zugesetzt. Strukturviskoses Schmelzfließverhalten in unverstärkten bzw. verstärkten Polyarylensulfiden ist noch deutlich ausgeprägt, wenn 0,5 bis 20 Gew.-Teile, vorzugsweise 1 bis 15 Gew.-Teile und besonders bevorzugt 2 bis 10 Gew.-Teile, an Komponenten B, bezogen auf Formmasse, eingesetzt werden.

Die erfindungsgemäß eingesetzten Komponenten B können auf verschiedene Weise in die Polyarylensulfid-Formmasse eingebracht werden, z.B. durch Schmelze-Mischung in Extrudern oder Knetern. Bevorzugt ist die Schmelzcompoundierung der Komponenten auf einem Zweiwellenextruder der Firma Werner & Pfleiderer oder einem Innenkneter.

Die Komponenten B werden vorzugsweise als pulverförmige Substanzen für die Schmelzcompoundierung eingesetzt, um eine gute Verteilung und Dosierbarkeit zu gewährleisten. Die Pulver werden z.B. durch Tieftemperatur-Mahlen unterhalb der Glastemperatur der Polymeren gewonnen. Zur Vermeidung von Verklumpungen werden diese Pulver mit gegebenenfalls Mengen von 1 bis 10 Gew.-% bezogen auf Polymer an geeigneten Pudermitteln versetzt. Solche Mittel sind bekannt. Beispiele dafür sind Talkum, Kieselsäuren, Metalloxide, Metallsalze usw..

Die erfindungsgemäßen Bis- oder Polymaleinimide sind z.T. kommerziell erhältlich, z.B. bei den Firmen Lentia, Ciba, Shell, BASF oder Mitsubishi Petrochemical.

Sie können auch z.B. analog GB-A 1 137 592 aus einem Di- oder Polyamin und Maleinsäureanhydrid hergestellt werden.

Geeignete Füll- und Verstärkungsstoffe als Komponente D sind faserige- oder teilchenförmige Stoffe mit einer bei den Verarbeitungs- und Gebrauchstemperaturen der Polyarylensulfide ausreichenden Temperaturbeständigkeit. Beispiele für faserige Stoffe sind Glasfasern, Kohlefasern, Aramidfasern, Metallfasern usw. Beispiele für teilchenförmige Stoffe sind Kaolin, Gips, Kreide, Talkum, Glaskugeln, Glimmer, Quarz, Bariumsulfat, Metallpulver usw. Bevorzugte Verstärkungsfasern sind Glasfasern und Kohlenfasern; bevorzugte Füllstoffe sind Quarz, Kaolin, Talkum, Glimmer.

Die Füll- und Verstärkungsmittel sowie andere übliche Additive werden durch Schmelzecompoundierung in die Formmassen aus (A + B) eingebracht. Diese werden in Form von Granulaten auf üblichen Verarbeitungsmaschinen zu beliebigen Formkörpern thermoplastisch verarbeitet.

Die Prüfung mechanischer und thermischer Eigenschaften erfolgte an Norm-Prüfkörpern nach DIN- oder ASTM-Vorschriften. Die Messung der Schmelzviskositäten erfolgte an Granulaten auf einem Hochdruck-Kapillar-Viskosimeter.

Die erfindungsgemäßen Formmassen weisen eine erhöhte Zähigkeit gegenüber anderen zähmodifizierten Polyarylensulfiden auf und besitzen eine gute Temperatur-und Chemikalien-Beständigkeit. Durch geeignete Mengen an hydriertem Nitrilkautschuk in der Formmasse kann eine ausgeprägte Strukturviskosität der Polymerschmelze bei der Verarbeitung erhalten werden.

Die erfindungsgemäßen Formmassen können Verwendung finden, zur Herstellung von Formkörpern, Folien, Fasern und Umhüllungsmaterialien.

## Beispiele

Acrylnitril-Butadien-Copolymere sind bekannt.

Die Hydrierung dieser Polymeren und deren analytische Charakterisierung geschieht z.B. analog der EP-A 134 023.

## Herstellung der Polyarylensulfid-Formmassen

Die Komponenten werden auf einem 2-Wellenextruder ZSK 32 (Werner & Pfleiderer) in der Schmelze bei Temperaturen zwischen 310 °C und 330 °C bei einem Durchsatz zwischen 7 und 10 kg/h gemischt. Hydrierter Nitrilkautschuk wurde in Form eines Pulvers eingesetzt.

Die abgekühlten Polymer-Stränge wurden granuliert, getrocknet, auf üblichen Spritzguß-Maschinen zu Formkörpern verarbeitet und nach DIN-Vorschriften geprüft.

T a b e l l e : Eigenschaften der erfindungsgemäßen PPS-Formmassen

| | PPS (95 Pas)[1] | PPS (60 Pas)[1] | Therban 2207®[2] Pulver | BMI[3] | Izod-Schlagzähigkeit ($kJ/m^2$) |
|---|---|---|---|---|---|
| Vergleich | 80 Gew.-% | | 20 Gew.-% | | 80 |
| Beispiel 1 | | 78 Gew.-% | 20 Gew.-% | 2 Gew.-% | nicht gebrochen |

1) gemessen bei 310° C, 1000 1/s

2) hydrierter Nitrilkautschuk der Firma BAYER mit einem Gehalt von ca. 43 % Acrylnitril mit 6 % Vulcasil®,

3) 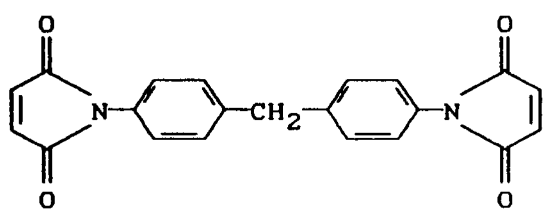 , BMI der Fa. Lentia

Überraschenderweise wird mit einem PPS niedrigerer Schmelzviskosität durch BMI-Zusatz eine höhere Schlagzähigkeit als beim Vergleichsversuch erzielt.

## Patentansprüche

1. Formmassen, enthaltend
   A) 30 bis 99,4 Gew.-Teile Polyarylensulfid, vorzugsweise Polyphenylensulfid,

B) 0,5 bis 70 Gew.-Teile an hydrierten Nitrilkautschuken und
C) 0,1 - 3 Gew.-Teile eines Bis- oder Polymaleinimids der Formel (I)

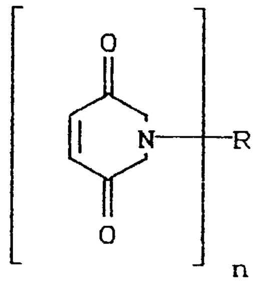

(I),

wobei

R für einen di- oder polyvalenten Rest aliphatischen $C_1$-$C_{22}$, araliphatischen $C_7$-$C_{22}$-Rest oder aromatischen $C_6$-$C_{14}$-Rest steht und

n für eine Zahl von 2 bis 22 steht

und die Gewichtsteile bezogen auf das Gesamtgewicht der Formassen (A + B + C) sind und gegebenenfalls

D) 0 bis 60 Gew.-Teile bezogen auf das Gesamtgewicht der Formmasse (A + B + C) an Füll- und Verstärkungsstoffen.

2. Formmassen nach Anspruch 1, dadurch gekennzeichnet, daß die hydrierten Nitrilkautschuke hydrierte Butadien-Acrylnitril-Copolymere sind.

3. Formmassen nach Anspruch 1, dadurch gekennzeichnet, daß der Hydriergrad der C = C-Doppelbindungen im hydrierten Nitrilkautschuk größer 50 % und der Gehalt an gebundenen ungesättigten Nitrilen 10-60 Gew.-% beträgt.

4. Formmassen nach Anspruch 1, dadurch gekennzeichnet, daß das Polyarylensulfid ein Polyphenylensulfid ist.

5. Formmassen nach Anspruch 1 bis 4, dadurch gekennzeichnet, daß der Gehalt an Komponente B 15 bis 40 Gew.-% beträgt.

6. Formmassen nach Anspruch 1, dadurch gekennzeichnet, daß der Anteil an hydrierten Nitrilkautschuken 10 bis 30 Gew.-Teile, bezogen auf Formmasse A + B, beträgt.

7. Verwendung der Formmassen nach Anspruch 1 zur Herstellung geformter Körper.

## Claims

1. Moulding compounds containing:

A) 30 to 99.4 parts by weight of polyarylene sulfide, preferably polyphenylene sulfide,
B) 0.5 to 70 parts by weight of hydrogenated nitrile rubbers and
C) 0.1 to 3 parts by weight of a bis- or polymaleic imide corresponding to formula (I):

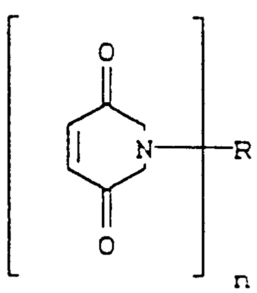

(I),

in which

R is a difunctional or polyfunctional aliphatic $C_{1-22}$, araliphatic $C_{7-22}$ or aromatic $C_{6-14}$ radical and

n is a number of 2 to 22,

the parts by weight being based on the total weight of the moulding compounds (A + B + C) and, optionally,

D) 0 to 60 parts by weight, based on the total weight of the moulding compound (A + B + C), of fillers and reinforcing materials.

**2.** Moulding compounds as claimed in claim 1, characterized in that the hydrogenated nitrile rubbers are hydrogenated butadiene/acrylonitrile copolymers.

**3.** Moulding compounds as claimed in claim 1, characterized in that the degree of hydrogenation of the C = C double bonds in the hydrogenated nitrile rubber is greater than 50% and the content of bound unsaturated nitriles is from 10 to 60% by weight.

**4.** Moulding compounds as claimed in claim 1, characterized in that the polyarylene sulfide is a polyphenylene sulfide.

**5.** Moulding compounds as claimed in claims 1 to 4, characterized in that the content of component B is from 15 to 40% by weight.

**6.** Moulding compounds as claimed in claim 1, characterized in that the hydrogenated nitrile rubbers are present in a quantity of 10 to 30 parts by weight, based on moulding compound A + B.

**7.** The use of the moulding compounds claimed in claim 1 for the production of moulded articles.

**Revendications**

**1.** Matières à mouler contenant

A) 30 à 99,4 parties en poids d'un sulfure de polyarylène, de préférence de sulfure de polyphénylène,

B) 0,5 à 70 parties en poids de caoutchouc nitrile hydrogéné et

C) 0,1 à 3 parties en poids d'un bis- ou poly-maléimide de formule (I)

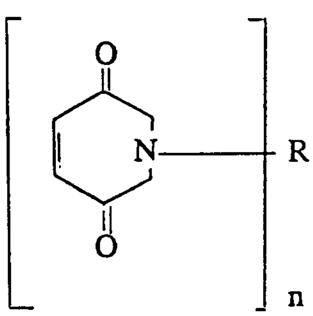

(I)

dans laquelle

R représente un radical di- ou poly-valent aliphatique en $C_1$-$C_{22}$, araliphatique en $C_7$-$C_{22}$ ou aromatique en $C_6$-$C_{14}$ et

n est un nombre allant de 2 à 22,

les indications de parties en poids données se rapportant au poids total des matières à mouler (A + B + C),

et le cas échéant

D) 0 à 60 parties en poids, par rapport au poids total des matières à mouler (A + B + C) de matières de charge et de matières renforçantes.

2. Matières à mouler selon revendication 1, caractérisées en ce que les caoutchoucs nitriles hydrogénés sont des copolymères butadiène-acrylonitrile hydrogénés.

3. Matières à mouler selon revendication 1, caractérisées en ce que le taux d'hydrogénation des doubles liaisons C = C du caoutchouc nitrile hydrogéné est supérieur à 50 %, et la teneur en nitriles insaturés combinés est de 10 à 60 % en poids.

4. Matières à mouler selon revendication 1, caractérisées en ce que le sulfure de polyarylène est un sulfure de polyphénylène.

5. Matières à mouler selon les revendications 1 à 4, caractérisées en ce que la teneur en le composant B est de 15 à 40 % en poids.

6. Matières à mouler selon revendication 1, caractérisées en ce que la proportion de caoutchouc nitrile hydrogéné est de 10 à 30 parties en poids par rapport à la matière à mouler A + B.

7. Utilisation des matières à mouler selon revendication 1 pour la fabrication de corps moulés.